# EUROPÄISCHE PATENTSCHRIFT

(11) **EP 1 464 809 B1**
(45) Veröffentlichungstag und Bekanntmachung des Hinweises auf die Patenterteilung: **26.10.2005**
(21) Anmeldenummer: 04003437.3
(22) Anmeldetag: 16.02.2004
(51) Int. Cl.: F02B 67/06, F16H 7/02

(54) **Mit einem Reibrad kombinierter Riementrieb für Aggregate einer Brennkraftmaschine**
Belt drive for accessories of an internal combustion engine with friction wheel
Transmission par courroie pour des groupes auxiliaires d'un moteur à combustion interne

(30) Priorität: 02.04.2003 DE 10324999
(43) Veröffentlichungstag der Anmeldung: 06.10.2004
(73) Patentinhaber: Bayerische Motoren Werke Aktiengesellschaft, 80809 München (DE)
(72) Erfinder: Wimmer, Rudolf, A-4431 Haidershofen (AT); Fössl, Peter, A-4441 Behamberg (AT)

(56) Entgegenhaltungen:
- GB-A- 2 006 876
- US-A- 3 085 758
- PATENT ABSTRACTS OF JAPAN vol. 1999, no. 02, 26. Februar 1999 (1999-02-26) & JP 10 299847 A (KOYO SEIKO CO LTD), 13. November 1998 (1998-11-13)

## Beschreibung

Die Erfindung bezieht sich auf einen mit einem Reibrad kombinierten Riementrieb für Aggregate einer Brennkraftmaschine, wobei das im Umschlingungsbereich eines Triebrades der Brennkraftmaschine oder eines Aggregates mit der Außenseite eines Riemens reibschlüssig zusammenwirkende Reibrad in Reibverbindung steht mit einem Antriebsrad eines gesonderten Nebenaggregates, wobei ferner das Reibrad mittels einer steuerbaren Einrichtung bei Bedarf drehzahl- und/oder lastabhängig in bzw. außer Eingriff mit einem der Reibpartner gehalten ist.

Eine derartige Anordnung wurde in der nicht veröffentlichten Patentanmeldung P 102 36 746 in allgemeiner Form vorgeschlagen ohne konkrete Ausgestaltung einer Steuer-Einrichtung zum bedarfsgerechten Verstellen des Reibrades relativ zum Antriebsrad oder zum Riemen.

Aus der DE 39 34 884 A1 ist zwar ein mit einem Reibrad kombinierter Riementrieb bekannt, wobei das Reibrad relativ zum Antriebsrad des Nebenaggregates mittels eines Exzenters einstellbar ist. Da jedoch das Reibrad über eine an einem federbelasteten Schwenkbügel angeordnete Riemen-Spannrolle angetrieben ist, dient die vorbeschriebene Exzenter-Einstellung bei veränderter Spannrollen-Position lediglich einer Korrektur des Reibschlusses zwischen Antriebsrad und Reibrad.

Der Erfindung liegt die Aufgabe zugrunde, für eine gattungsgemäße Anordnung eine Steuer-Einrichtung aufzuzeigen zum bedarfsgemäßen Zu - und Wegschalten des Reibrades vom Antriebsrad und/oder vom Riemen.

Diese Aufgabe ist mit dem Patentanspruch 1 dadurch gelöst, dass die Einrichtung einen das Reibrad tragenden Schwenkarm umfasst, der im reibradfernen Endabschnitt auf einem maschinenseitig drehbeweglich angeordneten Exzenter gelagert ist, über dessen jeweiliger Drehbewegungsrichtung der Schwenkarm zug- oder druckbeaufschlagt das Reibrad in bzw. außer Eingriff steuert , wobei ein der Steuer-Einrichtung zugeordneter, externer Servomotor mit dem Exzenter in einer Drehantriebsverbindung steht.

Mit der Erfindung kann das Nebenaggregat in vorteilhafter Weise je nach Bedarf zu - oder weggeschaltet werden, was insbesondere im Falle einer Kühlmittelpumpe der Brennkraftmaschine als Nebenaggregat die Möglichkeit ergibt, die Kühlmittelpumpe vor allem im Kaltstart der Brennkraftmaschine nicht anzutreiben. Gegenüber einer elektrisch angetriebenen Kühlmittelpumpe ergibt sich mit der erfindungsgemäßen Anordnung eine kostengünstigere Lösung für eine schnellere Erwärmung der Brennkraftmaschine nach dem Kaltstart mit einer Verbesserung von Wirkungsgrad und Emissionen. Weiter kann mit der Erfindung eine Kühlmittelpumpe mit überschüssiger Förderleistung im Hochdrehzahlbereich der Brennkraftmaschine gesteuert intermittierend betrieben werden. Schließlich bietet die Erfindung die weitere Möglichkeit zur Anwendung eines spannerlosen Riementriebes unter Einsatz eines bekannten Elastikriemens.

Um eine sichere Trennung des Reibrades zumindest von einem der genannten Reibpartner wie Antriebsrad und Riemen zu erzielen, ist der Exzenter mit einer quer zur Zug- bzw. Druckrichtung des Schwenkarmes gerichteten Exzentrizität als Ausgangslage angeordnet, wobei an einer freien Stirnseite des Exzenters ein von der Exzenterachse größtmöglich beabstandeter Mitnehmer einer Drehantriebsverbindung vorgesehen ist. Diese Drehantriebsverbindung umfasst für eine einfache Ausgestaltung der Erfindung eine mit einem maschinenseitig fixierten Servomotor verbundene Koppelstange, die am Exzenter über einen als Gelenk gestalteten Mitnehmer angreift. Die Koppelstange ist in miteinander teleskopierende Abschnitte unterteilt, die gegeneinander federelastisch abgestützt sind. Damit können bei unrundem Lauf vom Reibrad über den Schwenkarm in den Exzenter eingeleitete Stöße vom Servomotor im wesentlichen ferngehalten werden.

Zur Minimierung der dynamischen Belastung der erfindungsgemäßen Reibrad-Anordnung ist ferner vorgeschlagen, dass das Reibrad über einen auf Zug belasteten Schwenkarm in reibschlüssigen Eingriff mit Riemen und Antriebsrad des Nebenaggregates gesteuert ist, und dass das Reibrad außer Eingriff über eine auf den Schwenkarm entsprechend einwirkende Feder frei vom Antriebsrad auf dem Riemen im Umschlingungsbereich des jeweiligen Triebrades geführt angeordnet ist. In dieser Anordnung ist das Reibrad auch außer Eingriff angetrieben mit dem Vorteil, dass bei Zuschaltung des Reibrades zum Antriebsrad des Nebenaggregates lediglich dieses drehbeschleunigt werden muss. Bei einer möglichen Parkposition des Reibrades am Antriebsrad vom Riemen entfernt würde bei einem in Eingriff bringen mit dem Riemen durch die dann erforderliche Drehbeschleunigung von Reibrad und Nebenaggregat das Reibrad erheblichen dynamischen Belastungen ausgesetzt sein zum Nachteil einer reduzierten Betriebssicherheit.

Ein anschließender Vorschlag beschreibt eine vorteilhaft gekapselte Ausgestaltung der Exzentereinrichtung.

Ein abschließender Vorschlag bezieht sich auf ein Nebenaggregat als Kühlmittelpumpe, die kennfeldgesteuert mittels eines bekannten Servomotors zu- und abschaltbar ist.

Die Erfindung ist anhand eines in der Zeichnung gezeigten Ausführungsbeispiels beschrieben.
Es zeigt:
- Fig.1: eine an der Stirnseite einer Brennkraftmaschine angeordnete, erfindungsgemäße Anordnung eines mit einem Reibrad kombinierten Riementriebes,

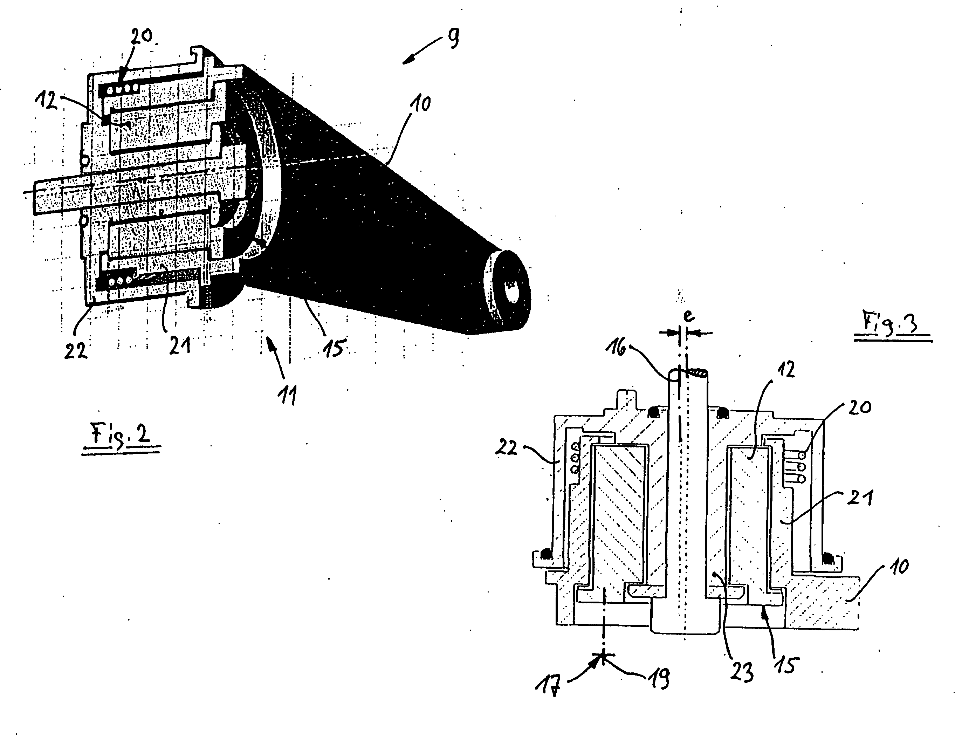

- Fig.2: einen Schwenkarm mit im Schnitt dargestellter Exzentereinrichtung,
- Fig.3: die Exzentereinrichtung vergrößert dargestellt.

In einem Riementrieb 2 für Aggregate 3 und 4 einer teilweise gezeigten Brennkraftmaschine 5 kann ein mit dem Riementrieb 2 kombiniertes Reibrad 1 im Umschlingungsbereich eines vorzugsweise kurbelwellenseitigen Triebrades 6 der Brennkraftmaschine 5 mit der Außenseite des Riemens 2' einerseits und mit einem Antriebsrad 7 eines gesonderten Nebenaggregates 8 andererseits zum Antrieb des Nebenaggregates 8 jeweils reibschlüssig in Verbindung stehen. Mittels einer steuerbaren Einrichtung 9 kann das Reibrad 1 ferner bei Bedarf drehzahl - und/oder lastabhängig außer Eingriff mit einem der Reibpartner 2',7 gehalten sein.

Zum bedarfsgemäßen Zu- und Abschalten des Nebenaggregates 8 umfasst erfindungsgemäß die Einrichtung 9 einen das Reibrad 1 tragenden Schwenkarm 10, der im reibradfernen Endabschnitt 11 auf einem maschinen - seitig drehbeweglich angeordneten Exzenter 12 gelagert ist, über dessen jeweiliger Drehbewegungsrichtung der Schwenkarm 10 zug - oder druckbeaufschlagt das Reibrad 1 in bzw. außer Eingriff steuert, wobei ein der Steuer-Einrichtung 9 zugeordneter, externer Servomotor 13 mit dem Exzenter 12 in Drehantriebsverbindung 14 steht.

Um einen einwandfreien variablen Antrieb des Nebenaggregates 8 sicherzustellen, ist der Exzenter 12 mit einer quer zur Zug - bzw. Druckrichtung des Schwenkarmes 10 gerichteten Exzentrizität "e" als Ausgangslage angeordnet mit dem Ziel einer größtmöglichen Verlagerung des Reibrades 1. Dieser Zielsetzung dient ferner ein an einer freien Stirnseite 15 des Exzenters 12 von der Exzenterachse 16 größtmöglich beabstandeter Mitnehmer 17 der Drehantriebsverbindung 14.

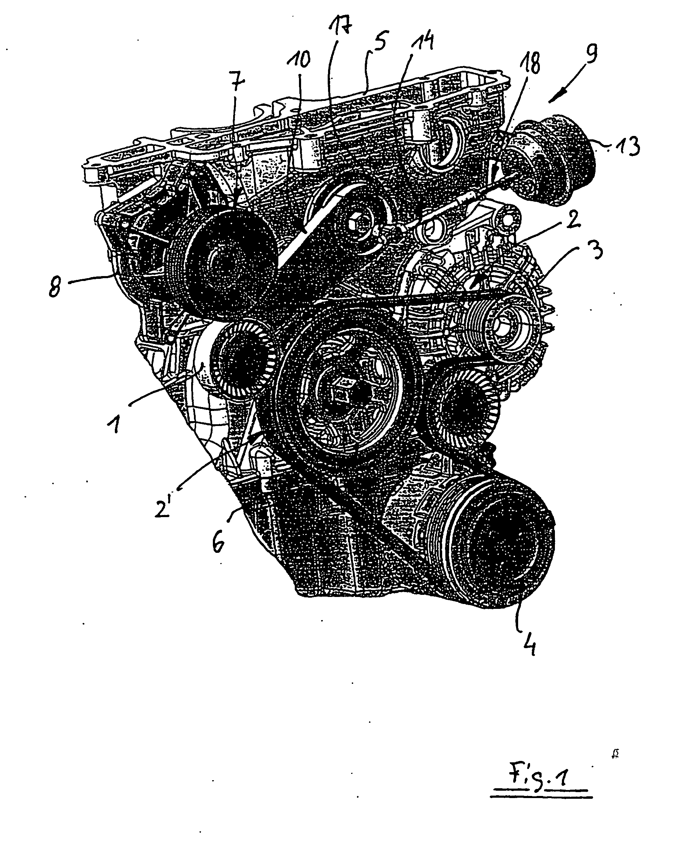

Wie aus Fig. 1 ersichtlich, umfasst die Drehantriebsverbindung 14 eine mit einem maschinenseitig fixierten Servomotor 13 verbundene Koppelstange 18, die am Exzenter 12 über einen als Gelenk 19 gestalteten Mitnehmer 17 angreift. Zur Stoßdämpfung gegenüber dem Servomotor 13 ist die Koppelstange 18 in miteinander teleskopierende , nicht gezeigte Abschnitte unterteilt, die mit einander federelastisch in Verbindung stehen derart, dass vom Reibrad 1 insbesondere beim Eingriff mit dem Antriebsrad 7 über den Schwenkarm 10 und den Exzenter 12 in die Koppelstange 18 eingeleitete Stöße vom Servomotor 13 im wesentlichen ferngehalten sind.

Vorzugsweise ist das Reibrad 1 aus seiner Nicht-Eingriffsstellung bzw. Parkstellung über einen auf Zug belasteten Schwenkarm 10 in reibschlüssigen Eingriff mit Riemen 2' und Antriebsrad 7 des Nebenaggregates 8 gesteuert. In Nicht - Eingriffsstellung bzw. Parkstellung verbleibt das Reibrad 1 vorzugsweise auf der Außenseite des Riemens 2' im Umschlingungsbereich des Triebrades 6, wofür eine Feder 20 in entsprechender Weise auf den Schwenkarm 10 einwirkt zur antreibenden Mitnahme des Reibrades 1 durch den Riemen 2'.

Für eine kleinbauende Exzentereinrichtung ist der Schwenkarm 10 über eine drehfest verbundene Buchse 21 auf einem in einem topfartigen Gehäuse 22 mit zentrischem Lagerbolzen 23 drehbeweglich angeordneten Exzenter 12 gelagert, wobei eine im Gehäuse 22 angeordnete, einerseits maschinenseitig fixierte und andererseits auf die Buchse 21 des Schwenkarmes 10 drehend einwirkende Schraubenfeder 20 auf den Schwenkarm 10 zur Führung des Reibrades 1 außer Eingriff auf dem Riemen 2' wirkt.

Der erfindungsgemäße, variable Antrieb des Nebenaggregates 8 der Brennkraftmaschine 5 ist vorteilhaft für eine Kühlmittelpumpe, deren Antriebsrad 7 mit dem Reibrad 1 über den von Parametern der Brennkraftmaschine 5 mittels einer Motronic kennfeldgesteuerten Servomotor 13 in Eingriff gebracht ist, wobei der Servomotor 13 hydraulisch, pneumatisch, elektrisch oder magnetisch betätigt ist. Weiter kann der Servomotor 13 auch durch einen einzelnen Parameter wie die Temperatur des von der Pumpe geförderten Kühlmittels angesteuert sein. Gegebenenfalls kann auf einen Kühlmittel-Thermostaten verzichtet sein.

## Patentansprüche

1. Mit einem Reibrad kombinierter Riementrieb für Aggregate einer Brennkraftmaschine,
- wobei das im Umschlingungsbereich eines Triebrades (6) der Brennkraft - maschine (5) oder eines Aggregates (3,4) mit der Außenseite eines Riemens (2') reibschlüssig zusammenwirkende Reibrad (1) in Reibverbindung steht mit einem Antriebsrad (7) eines gesonderten Nebenaggregates (8), wobei
- ferner das Reibrad (1) mittels einer steuerbaren Einrichtung (9) bei Bedarf drehzahl - und/oder lastabhängig außer Eingriff mit einem der Reibpartner (2',7) gehalten ist,
**dadurch gekennzeichnet,**
- **dass** die Einrichtung (9) einen das Reibrad (1) tragenden Schwenkarm (10) umfasst, der
- im reibradfernen Endabschnitt (11) auf einem maschinenseitig drehbeweglich angeordneten Exzenter (12) gelagert ist, über dessen
- jeweiliger Drehbewegungsrichtung der Schwenkarm (10) zug - oder druckbeaufschlagt das Reibrad (1) in bzw. außer Eingriff steuert, wobei
- ein der Steuer-Einrichtung (9) zugeordneter, externer Servomotor (13) mit dem Exzenter (12) in einer Drehantriebsverbindung (14) steht.

2. Riementrieb nach Anspruch 1, **dadurch gekennzeichnet,**
- **dass** der Exzenter (12) mit einer quer zur Zug - bzw. Druckrichtung des Schwenkarmes (10) gerichteten Exzentrizität (e) als Ausgangslage angeordnet ist, wobei
- an einer freien Stirnseite (15) des Exzenters (12) ein von der Exzenterachse (16) größtmöglich beabstandeter Mitnehmer (17) der Drehantriebsverbindung (14) vorgesehen ist.

3. Riementrieb nach Anspruch 2, **dadurch gekennzeichnet,**
- **dass** die Drehantriebsverbindung (14) eine mit einem maschinenseitig fixierten Servomotor (13) verbundene Koppelstange (18) umfasst, die
- am Exzenter (12) über einen als Gelenk (19) gestalteten Mitnehmer (17) angreift, wobei
- die Koppelstange (18) zwei miteinander teleskopierende Abschnitte umfasst, die bei zugeschaltetem Nebenaggregat (8) gegeneinander federelastisch abgestützt sind.

4. Riementrieb nach den Ansprüchen 1-3, **dadurch gekennzeichnet,**
- **dass** das Reibrad (1) über einen auf Zug belasteten Schwenkarm (10) in reibschlüssigen Eingriff mit Riemen (2') und Antriebsrad (7) des Neben - aggregates (8) gesteuert ist, und
- **dass** das Reibrad (1) außer Eingriff über eine auf den Schwenkarm (10) entsprechend einwirkende Feder (20) frei vom Antriebsrad (7) auf dem Riemen (2') im Umschlingungsbereich des jeweiligen Triebrades (6) geführt angeordnet ist.

5. Riementrieb nach den Ansprüchen 1 - 4, **dadurch gekennzeichnet,**
- **dass** der Schwenkarm (10) über eine drehfest verbundene Buchse (21) auf einem in einem topfartigen Gehäuse (22) mit zentrischem Lagerbolzen (23) drehbeweglich angeordneten Exzenter (12) gelagert ist, wobei
- eine im Gehäuse (22) angeordnete, einerseits maschinenseitig fixierte und andererseits auf die Buchse (21) des Schwenkarmes (10) drehend einwirkende Schraubendrehfeder (20) auf den Schwenkarm (10) zur Führung des Reibrades (1) außer Eingriff auf dem Riemen (2') wirkt.

6. Riementrieb nach den Ansprüchen 1 - 5, **dadurch gekennzeichnet,**
- **dass** das Nebenaggregat (8) eine der Brennkraftmaschine (5) dienende Kühlmittelpumpe ist, deren
- Antriebsrad (7) mit dem Reibrad (1) über den von Parametern der Brennkraftmaschine (5) mittels einer Motronic kennfeldgesteuerten Servomotor (13) in Eingriff gebracht ist, wobei
- der Servomotor (13) hydraulisch, pneumatisch, elektrisch oder magnetisch betätigt ist.

## Claims

1. A combined belt drive and friction wheel for units of an internal combustion engine,
- wherein the friction wheel (1), which frictionally co-operates with the outside of a belt (2') in the belt contact region of a drive wheel (6) of the engine (5) or of a unit (3, 4) is in frictional connection with a drive wheel (7) of a separate auxiliary unit (8), wherein
- when required the friction wheel (1), via a controllable device (9), is held out of engagement with one of the frictional components (2', 7) in dependence on the speed and/or load,
**characterised in that**
- the device (9) comprises a swivel arm (10) which bears the friction wheel (1) and
- its end portion (11) remote from the friction wheel is mounted on an eccentric (12) mounted in rotation on the engine,
- the swivel arm (10) being moved into or out of engagement with the friction wheel (1) by tension or pressure in dependence on the direction of rotation of the eccentric, wherein
- an external servomotor (13) associated with the control device (9) is in rotary drive connection (14) with the eccentric (12).

2. A belt drive according to claim 1, **characterised in that**
- in the starting position the eccentric (12) is disposed with an eccentricity (e) directed transversely of the tension or pressure direction of the swivel arm (10), wherein
- a driver (17) on the rotary drive connection (14) is provided at the maximum possible distance from the axis (16) of the eccentric (12) on a free endface (15) thereof.

3. A belt drive according to claim 2, **characterised in that**
- the rotary drive connection (14) comprises a coupling rod (18) connected to a servomotor (13) fixed on the engine,
- engaging the eccentric (12) via a driver (17) in the form of a joint (19), wherein
- the coupling rod (18) comprises two telescopic portions which with spring elasticity abut one another when the auxiliary unit (8) is connected.

4. A belt drive according to claims 1 - 3, **characterised in that**
- the friction wheel (1) is brought by a tension-loaded swivel arm (10) into frictional engagement with the belt (2') and drive wheel (7) of the auxiliary unit (8) and
- the friction wheel (1), via a spring (20) suitably acting on the swivel arm (10), is brought out of engagement and free from the drive wheel (7) on the belt (2') in the belt contact region of the respective drive wheel (6).

5. A belt drive according to claims 1 - 4, **characterised in that**
- the swivel arm (10), via a co-rotatably connected sleeve (21), is mounted on an eccentric (12) rotatable in a pot-like casing (22) with a central bearing bolt (23), wherein
- a rotary helical spring (20) disposed in the casing (22) and fixed to the engine at one end whereas its other end exerts rotary action on the bush (21) of the swivel arm (10), acts on the swivel arm (10) so as to move the friction wheel (1) out of engagement on the belt (2').

6. A belt drive according to claims 1 - 5, **characterised in that**
- the auxiliary unit (8) is a coolant pump for the engine (5),
- the drive wheel (7) being brought into engagement with the friction wheel (1) by a servomotor (13) controlled by parameters of the engine (5) via a Motronic in accordance with a performance graph, wherein
- the servomotor (13) is hydraulically, pneumatically, electrically or magnetically actuated.

## Revendications

1. Transmission par courroie combinée avec une roue de friction pour groupes d'un moteur à combustion interne, dans laquelle
- la roue de friction (1) coopérant par friction avec la face extérieure d'une courroie (2') dans la zone d'enroulement d'une roue motrice (6) du moteur à combustion interne (5) ou d'un groupe (3, 4) est en contact de friction avec une roue motrice (7) d'un groupe auxiliaire (8) distinct,
- la roue de friction (1) est tenue hors engagement avec l'un des partenaires de friction (2', 7) selon les besoins en fonction de la vitesse de rotation et/ou de la charge au moyen d'un dispositif de commande (9),
**caractérisée en ce que**
- le dispositif (9) comprend un bras pivotant (10) portant la roue de friction (1), qui
- dans le segment final (11) éloigné de la roue de friction est logé sur un excentrique (12) disposé en rotation côté machine,
- par la direction de rotation respective duquel le bras pivotant (10) commande par traction ou pression l'engagement ou le désengagement de la roue de friction (1), et
- un servomoteur (13) extérieur associé au dispositif de commande (9) est en liaison d'entraînement en rotation (14) avec l'excentrique (12).

2. Transmission par courroie selon la revendication 1,
**caractérisée en ce que**
- l'excentrique (12) est disposé en position initiale avec une excentricité (e) orientée transversalement à la direction de traction ou de pression du bras pivotant (10), et
- un entraîneur (17) de la liaison d'entraînement en rotation (14) est prévu sur une face frontale (15) libre de l'excentrique (12) à une distance maximale par rapport à l'axe d'excentrique (16).

3. Transmission par courroie selon la revendication 2,
**caractérisée en ce que**
- la liaison d'entraînement en rotation (14) comprend une bielle de couplage (18) reliée à un servomoteur (13) fixé côté machine, qui
- intervient sur l'excentrique (12) par l'intermédiaire d'un entraîneur (17) en forme d'articulation (19), et
- la bielle de couplage (18) comprend deux segments télescopiques qui s'appuient mutuellement de façon élastique lorsque le groupe auxiliaire (8) est activé.

4. Transmission par courroie selon les revendications 1 à 3,
**caractérisée en ce que**
- la roue de friction (1) est commandée par un bras pivotant (10) sollicité par traction pour s'engager par friction avec la courroie (2') et la roue motrice (7) du groupe auxiliaire (8), et
- la roue de friction (1) est disposée hors engagement par l'intermédiaire d'un ressort (20) agissant à cet effet sur le bras pivotant (10), libre de la roue motrice (7), sur la courroie (2') dans la zone d'enroulement de la roue motrice respective (6).

5. Transmission par courroie selon les revendications 1 à 4,
**caractérisée en ce que**
- le bras pivotant (10) est logé par l'intermédiaire d'une douille (21) solidaire en rotation sur un excentrique (12) disposé en rotation avec des boulons de logement (23) centrés dans un boîtier (22) en forme de pot, et
- un ressort hélicoïdal (20) disposé dans le boîtier (22) fixé d'une part côté machine et agissant d'autre part par rotation sur la douille (21) du bras pivotant (10) agit sur le bras pivotant (10) pour guider la roue de friction (1) hors engagement sur la courroie (2').

6. Transmission par courroie selon les revendications 1 à 5,
**caractérisée en ce que**
- le groupe auxiliaire (8) est une pompe à réfrigérant servant au moteur à combustion interne (5), dont
- la roue motrice (7) est mise en engagement avec la roue de friction (1) par le servomoteur (13) commandé par champ caractéristique au moyen d'une Motronic à l'aide de paramètres du moteur à combustion interne (5), et
- le servomoteur (13) est actionné par des moyens hydrauliques, pneumatiques, électriques ou magnétiques.
